(19) Europäisches Patentamt
European Patent Office
Office européen des brevets

(11) **EP 2 037 088 B1**

(12) **EUROPÄISCHE PATENTSCHRIFT**

(45) Veröffentlichungstag und Bekanntmachung des Hinweises auf die Patenterteilung:
**07.12.2011 Patentblatt 2011/49**

(51) Int Cl.:
*F01M 1/06* (2006.01)   *F16C 7/02* (2006.01)
*F16J 1/16* (2006.01)

(21) Anmeldenummer: **07116079.0**

(22) Anmeldetag: **11.09.2007**

(54) **Pleuel**

Connecting rod

Bielle

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**18.03.2009 Patentblatt 2009/12**

(73) Patentinhaber: **Georg Fischer GmbH & Co. KG**
**40822 Mettmann (DE)**

(72) Erfinder:
• **Wehrmann, Lutz**
**40822 Mettmann (DE)**
• **Hecker, Andreas**
**78267 Aach (DE)**
• **Güll, Andreas**
**47167 Duisburg (DE)**
• **Schott, Stephen**
**40822 Mettmann (DE)**
• **Menk, Werner**
**8200 Schaffhausen (CH)**

(74) Vertreter: **De Colle, Piergiacomo et al**
**Georg Fischer AG**
**Amsler-Laffon-Strasse 9**
**8201 Schaffhausen (CH)**

(56) Entgegenhaltungen:
DE-C- 967 568     DE-C1- 3 505 964
US-A- 1 628 652     US-A- 3 482 467

**Beschreibung**

Die Erfindung bezieht sich auf einen Pleuel für Verbrennungsmotoren umfassend ein erstes kleineres Pleuelauge zur Verbindung des Pleuels mit dem Kolbenzapfen, ein zweites grösseres Pleuelauge zur Verbindung des Pleuels mit der Kurbelwelle, eine Pleuelstange mit einer Längsachse zur festen Verbindung des ersten kleineren Pleuelauges mit dem zweiten grösseren Pleuelauge und eine Bohrung zur Zuführung des Schmiermittels von der Kurbelwelle zum Kolbenzapfen oder umgekehrt, wobei die Bohrung symmetrisch zur Längsachse ausgebildet ist.

Im Kraftfahrzeugbau werden Pleuel verwendet um die Hubbewegung des Kolbens im Verbrennungsmotor auf die Drehbewegung der Kurbelwelle zu übertragen Um die Reibung an den Kontaktflächen zwischen den relativ zu einander bewegten Flächen des Pleuels, des Kolbens und der Kurbelwelle zu reduzieren, wird Schmiermittel eingesetzt. Ausserdem wird mit dem Schmiermittel auch Wärme abgeführt. Das Schmiermittel muss möglichst wirkungsvoll an den Kontaktflächen und an den zu kühlenden Flächen gefördert werden. Auch unmittelbar nach dem Start des Motors muss eine gute Schmierung gewährleistet sein. Schlecht oder nicht geschmierte Kontaktflächen laufen heiss, verursachen Geräusche und übermässige Abnutzung.

Um das Schmiermittel in ausreichender Menge an den Kontaktflächen zu fördern, sind Ölspritz- oder -schleudereinrichtungen bekannt. Auch Bohrungen entlang der Längsachse der Pleuelstange sind bekannt. Die Herstellung dieser relativ langen Bohrungen mit relativ kleinem Durchmesser, wobei das Längen-/ Durchmesserverhältnis grösser als 30 ist, ist jedoch sehr aufwändig. Daher weisen die meisten solchen Bohrungen einen zu grossen Durchmesser auf, was dazu führt, dass einerseits die Pleuelstange unnötig geschwächt wird und andererseits die Strömungsgeschwindigkeit des Schmiermittels in der Bohrung geringer als gewünscht wird. Zudem kann bei einem überdimensionierten Querschnitt des Ölkanals die Ölsäule im Kanal in Schwingung geraten, was zu einem Abreissen der Ölförderung führen kann.

Aus der US 1 628 652 ist eine Kolbenkonstruktion für grossvolumige Verbrennungsmotoren bekannt. Die Konstruktion weist im Inneren des Kolbens wärmeleitfähige metallische Rippen auf, um die Wärme des Kolbenkopfes schneller zur Wand des Kolbens ableiten zu können. Zusätzlich zur Wärmeableitung wird Öl als Kühl- und Schmiermittel von der Kurbelwelle zum Kolbenbolzen zugeführt. Hierzu ist eine nicht näher beschriebene Leitung durch die Pleuelstange hindurch verlaufend angeordnet, entsprechend dem Oberbegriff von Anspruch 1.

Aus der US 3 482 467 ist weiterhin ein Pleuel mit einem geteilten grösseren Kolbenauge für schnell laufenden Kolbenmotoren bekannt. In der hohlen Pleuelstange ist ein nicht näher beschriebenes Ölrohr angeordnet, dass nachträglich entlang der Längsachse der Pleuelstange eingesetzt wird. Um die Wärmeableitung zu verbessern, wird die hohle Pleuelstange mit Natrium gefüllt.

Aus der DE 10 2004 048 939 ist eine Pleuelstange mit einem Schmiermittelrohr bekannt. Das Rohr ist auf einer Aussenseite mit der Pleuelstange verbunden angeordnet um das Schmiermittel vom grösseren unteren Pleuelauge zum kleineren oberen Pleuelauge, d.h. vom Kurbelwellenkasten zum Kolben, zu fördern. Das Rohr hat einen Innendurchmesser von ungefähr 3 mm, ist aus Polyamid hergestellt und wird auf halber Höhe einseitig aussen an der Pleuelstange durch punktgeschweisste Streifen fixiert.

Ausgehend von diesem Stand der Technik ist es Aufgabe der Erfindung, ein Pleuel anzugeben, der möglichst einfach herzustellen ist, der eine möglichst leichte und allseitig symmetrische Pleuelstange aufweist, wobei die Strömungsverhältnisse für das Schmiermittel optimal sind.

Diese Aufgabe wird gelöst durch einen Pleuel für Verbrennungsmotoren umfassend ein erstes kleineres Pleuelauge zur Verbindung des Pleuels mit dem Kolbenzapfen, ein zweites grösseres Pleuelauge zur Verbindung des Pleuels mit der Kurbelwelle, eine Pleuelstange mit einer Längsachse zur festen Verbindung des ersten kleineren Pleuelauges mit dem zweiten grösseren Pleuelauge und eine Bohrung zur Zuführung des Schmiermittels von der Kurbelwelle zum Kolbenzapfen oder umgekehrt, wobei die Bohrung symmetrisch zur Längsachse ausgebildet ist und wobei die Bohrung in einem mit Gusseisen umgossenen Stahlrohr ausgebildet ist und dass die Bohrung (5) einen Durchmesser von weniger als 5 mm aufweist.

Bevorzugte Weiterbildungen der Erfindung ergeben sich aus den abhängigen Ansprüchen.

Es ist von Vorteil, dass die Bohrung möglichst einfach, d.h. ohne aufwändige Bohrarbeit mit Spezialbohrmaschinen hergestellt werden kann. Dies wird dadurch erreicht, dass die Bohrung in einem mit Gusseisen umgossenen Stahlrohr ausgebildet ist. Dies wird auch dadurch erreicht, dass vor dem Giessprozess das Stahlrohr an beiden Enden geschlossen ausgebildet ist. Dies wird auch dadurch erreicht, dass das Stahlrohr zumindest im geraden Bereich der Pleuelstange geradlinig ausgebildet ist. Im Bereich der beiden Pleuelaugen kann das Stahlrohr auch unter einem Winkel zur Achse der Pleuelstange angeordnet sein.

Weiter ist es von Vorteil, dass das Stahlrohr eine einwandfreie Verbindung mit dem umgebenden Metall eingeht. Dies wird erreicht durch eine Abstimmung der Wandstärke des Stahlrohres auf die Wandstärke des das Stahlrohr umgebenden Gusseisens.

Ein Ausführungsbeispiel der Erfindung wird anhand der Figuren beschrieben. Es zeigen:

Figur 1 eine Sicht auf einen erfindungsgemässen Pleuel und

Figur 2 eine um 90° seitlich verlegte Sicht auf den teilweise geschnittenen Pleuel von Figur 1.

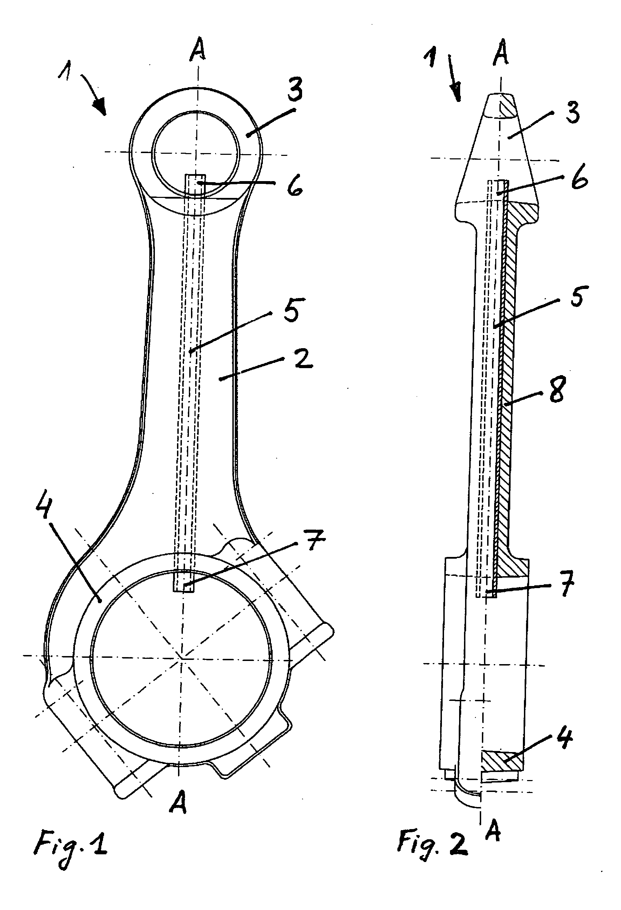

In den Figuren 1 und 2 ist schematisch ein Pleuel 1 dargestellt. Der Pleuel 1 besteht aus einer Pleuelstange 2 mit einem ersten oberen kleineren Pleuelauge 3 und einem zweiten unteren grösseren Pleuelauge 4. Der Pleuel 1 dient als Verbindungsglied zwischen einem Kolben und der Kurbelwelle in einem Verbrennungsmotor, die hier nicht abgebildet sind. Ähnliche Pleuel 1 werden jedoch auch in Kolbenpumpen und -Kompressoren verwendet. Das kleine obere Pleuelauge 3 wird mit einem Zapfen im Inneren des Kolbens verbunden. Das grössere untere Pleuelauge 4 wird nach dem Giessvorgang entlang der Mittellinie des Auges 4 in zwei Teilen getrennt, auf die Kurbelwelle montiert und wieder mittels Schrauben zusammen gefügt.

Entlang der Längsachse A des Pleuels 1 ist ein Rohr 5 dargestellt. Das Rohr 5 ist ein an beiden Enden 6,7 geschlossenes Stahlrohr 5. Das Stahlrohr 5 wird vor dem Giessvorgang in die Giessform eingelegt und mit der Schmelze des Pleuels 1 umgossen. Das einzugiessende Stahlrohr 5 wird gefüllt mit Luft, d.h. ohne eine spezielle Füllung eingelegt und umgossen. Anstelle von Luft kann auch ein Gas mit einer höheren spezifischen Wärme als Luft, beispielsweise Stickstoff, eingefüllt werden. Eine Füllung mit Luft oder Gas hat gegenüber einer Füllung mit Feststoffpartikeln den Vorteil, dass beim Giessvorgang kein Material an der Innenwand des Stahlrohres 1 haften bleibt und den freien Durchgang verstopft.

Nach dem Giessvorgang muss kein Hüllmaterial aus dem Stahlrohr 1 entfernt werden. Die verschlossenen oberen und unteren Enden 6,7 des Stahlrohres stehen, wie in Figur 1 und 2 ersichtlich, vor in der Öffnung der Pleuelaugen 3,4. Die vorstehenden geschlossene Bereichen 6,7 werden nach dem Giessvorgang abgeschnitten. Hiermit wird sichergestellt, dass das in der Pleuelstange 2 eingegossene Stahlrohr 5 über der ganzen nutzbaren Länge offen ist und für den Öldurchlass frei wird.

Beim Umgiessen des Stahlrohres 5 mit dem Gusseisen 8 des Pleuels 1 muss sichergestellt werden, dass einerseits das Stahlrohr 5 nicht soweit auf schmilzt, dass der freie Durchgang nicht mehr vorhanden ist, und andererseits dass die Schmelze eine möglichst formschlüssige Verbindung mit der Aussenfläche des Stahlrohres eingeht. Hierzu werden die Wandstärkenverhältnisse des Stahlrohres 5 und die Wandstärke des zu umgiessenden Materials 8 der Pleuelstange 2 zumindest an der engsten Stelle des Pleuels 1 wie folgt bestimmt:

$$\text{Wandstärke des Rohres in mm} = a.X + b.Y$$

wobei a und b empirisch ermittelte Konstanten sind, die von Gusswerkstoff, Giesstemperatur und Bauteilgeometrie abhängig sind, wobei X die Schmelzemenge in kg ist, welche am Stahlrohr 5 vorbei fliesst, und wobei Y der lokale Modul in cm des Gusstückes im Bereich des umgossenen Stahlrohres 5 ist. Die Schmelzemenge X, die am Stahlrohr 5 vorbei fliesst, liegt im Bereich von 0.1 bis 5 kg. Der Modul des Pleuels, d.h. das Verhältnis Volumen zu Aussenfläche liegt dabei im Bereich von 0.2 bis 1.5 $cm^3/cm^2$.

In der Tabelle 1 sind als Resultat die erreichten Wandstärken des Stahlrohres 5 in mm bei verschiedenen Werten der Konstanten a und b dargestellt.

**Tabelle 1**

| | | b | | | |
|---|---|---|---|---|---|
| | | 0.3 | 1 | 4 | 6.5 |
| a | 0.1 | 0.41 | 0.9 | 3 | 4.75 |
| | 0.6 | 1,41 | 1.9 | 4 | 5.75 |
| | 1.6 | 3.41 | 3.9 | 6 | 7.75 |
| | 2.1 | 4.41 | 4.9 | 7 | 8.75 |

Die Wandstärke des Stahlrohres 5 beträgt 0,41 bis 8,75 mm, vorzugsweise 1,9 bis 6 mm. Es wird möglich, Bohrungen mit Innendurchmesser von weniger als 2 mm Ober einer Länge der Pleuelstange von mehr als 100 mm herzustellen, was ein erreichtes Längen-/ Durchmesserverhältnis von mindestens 50 ergibt.

Das einzugiessende Strahlrohr 5 kann aus einem unbeschichteten Baustahl hergestellt werden. Die Aussenseite des Stahlrohres 5 kann vor dem Einlegen beschichtet werden. Die Beschichtung kann als eine metallische oder nichtmetallische Schicht ausgebildet sein. Die Beschichtung kann durch chemische Abscheidung, beispielsweise durch eine Phosphatierung hergestellt werden.

Als Gusswerkstoff kann ein Gusseisen mit Kugelgraphit mit einer hohen Oberflächenhärte, beispielsweise die so genannte Legierung SiboDur mit der Zusammensetzung 2.5-3.8 Gew.% C, 2.4-3.4 Gew.% Si, 0.02-0.06 Gew.% Mg, 0.002-0.02 Gew.% Al, 0.0002-0.002 Gew.% B, 0.1-1.5 Gew.% Cu und 01.-1.0 Gew.% Mn, Rest Fe eingesetzt werden.

Im Bereich der Pleuelaugen 3,4 kann das Stahlrohr 5 auch von der Richtung der Achse A der Pleuelstange 2 abgewinkelt angeordnet sein. Hiermit wird erreicht, dass beispielsweise im Bereich des oberen kleineren Pleuelauges 3 die Innenwand des Kolbens besser gekühlt werden kann. Es ist auch denkbar, statt ein durchgehendes Stahlrohr 5 ein in den Bereichen der Pleuelaugen 3,4 mit mehreren Ausgängen verzweigtes Stahlrohr 5 einzulegen.

Die Technik des Umgiessens eines Stahlrohres 5 mit Gusseisen 8 kann auch in anderen Anwendungsgebieten im Fahrzeugbau, beispielsweise zur Herstellung einer Einspritzleiste, oder im allgemeinen Maschinenbau verwendet werden. Anstelle des Stahlrohres 5 kann auch ein Rohr aus einem keramischen Werkstoff oder aus Glas umgossen werden.

## Patentansprüche

1. Pleuel (1) für Verbrennungsmotoren umfassend ein erstes kleineres Pleuelauge (3) zur Verbindung des Pleuels (1) mit dem Kolbenzapfen, ein zweites grösseres Pleuelauge (4) zur Verbindung des Pleuels (1) mit der Kurbelwelle, eine Pleuelstange (2) mit einer Längsachse (A) zur festen Verbindung des ersten kleineren Pleuelauges (3) mit dem zweiten grösseren Pleuelauge (4) und eine Bohrung (5) zur Zuführung des Schmiermittels von der Kurbelwelle zum Kolbenzapfen oder umgekehrt, wobei die Bohrung (5) symmetrisch zur Längsachse (A) ausgebildet ist, **dadurch gekennzeichnet, dass** die Bohrung (5) in einem mit Gusseisen (8) umgossenen Stahlrohr (5) ausgebildet ist und dass die Bohrung (5) einen Durchmesser von weniger als 5 mm aufweist.

2. Pleuel (1) nach Anspruch 1, **dadurch gekennzeichnet, dass** das Stahlrohr (5) eine Wandstärke in mm = a.X +b.Y aufweist, wobei a und b empirisch ermittelte Konstanten sind, die von Gusswerkstoff, Giesstemperatur und Bauteilgeometrie abhängig sind,
wobei X die Schmelzemenge in kg ist, welche am Stahlrohr (5) vorbei fliesst, und wobei Y der lokale Modul in cm des Gussstückes im Bereich des umgossenen Stahlrohres (5) ist.

3. Pleuel (1) nach mindestens einem der Ansprüche 1 und 2, **dadurch gekennzeichnet, dass** das Stahlrohr (5) vor dem Giessvorgang an beiden Enden (6,7) geschlossen ausgebildet ist.

4. Pleuel (1) nach mindestens einem der Ansprüche 1 bis 3, **dadurch gekennzeichnet, dass** das Stahlrohr (5) zumindest im Bereich der Pleuelstange (2) geradlinig ausgebildet ist.

5. Pleuel (1) nach mindestens einem der Ansprüche 1 bis 4, **dadurch gekennzeichnet, dass** das Stahlrohr (5) eine Wandstärke von 0.4 bis 8.75 mm, vorzugsweise eine Wandstärke von 1.9 bis 6 mm aufweist.

6. Pleuel (1) nach mindestens einem der Ansprüche 1 bis 5, **dadurch gekennzeichnet, dass** als Gusseisen (8) eine Gusseisenlegierung mit Kugelgraphit mit einer hohen Oberflächenhärte, beispielsweise eine Legierung mit der Zusammensetzung 2.5-3.8 Gew.% C, 2.4-3.4 Gew.% Si, 0.02-0.06 Gew.% Mg 0.002-0.02 Gew.% Al, 0.0002-0.002 Gew.% B, 0.1-1.5 Gew.% Cu und 01.-1.0 Gew.% Mn, Rest Fe eingesetzt wird.

7. Pleuel (1) nach mindestens einem der Ansprüche 1 bis 6, **dadurch gekennzeichnet, dass** das Stahlrohr (5) aus einem unbeschichteten Baustahl hergestellt ist.

8. Pleuel (1) nach mindestens einem der Ansprüche 1 bis 7, **dadurch gekennzeichnet, dass** die Aussenseite des Stahlrohres (5) eine metallische oder nichtmetallische Beschichtung aufweist.

9. Pleuel (1) nach Anspruch 8, **dadurch gekennzeichnet, dass** die Beschichtung durch eine chemische Abscheidung, beispielsweise durch eine Phosphatierung, hergestellt wird.

## Claims

1. Piston rod (1) for internal combustion engines, comprising a first, relatively small piston-rod eye (3) for connecting the piston rod (1) to the piston pin, a second, relatively large piston-rod eye (4) for connecting the piston rod (1) to the crankshaft, a connecting rod (2) having a longitudinal axis (A) for fixedly connecting the first, relatively small piston-rod eye (3) to the second, relatively large piston-rod eye (4), and a borehole (5) for feeding the lubricant from the crankshaft to the piston pin or vice versa, wherein the borehole (5) is formed symmetrically with respect to the longitudinal axis (A), **characterized in that** the borehole (5) is formed in a steel tube (5) around which cast iron (8) has been cast, and **in that** the borehole (5) has a diameter of less than 5 mm.

**2.** Piston rod (1) according to Claim 1, **characterized in that** the steel tube (5) has a wall thickness in mm = a.X + b.Y, where a and b are empirically determined constants which are dependent on the cast material, the casting temperature and the component geometry,
where X is the amount of melt in kg which flows past the steel tube (5), and where Y is the local modulus in cm of the cast piece in the region of the steel tube (5) around which cast material has been cast.

**3.** Piston rod (1) according to at least one of Claims 1 and 2, **characterized in that** the steel tube (5) is formed so as to be closed at both ends (6, 7) before the casting operation.

**4.** Piston rod (1) according to at least one of Claims 1 to 3, **characterized in that** the steel tube (5) has a rectilinear form at least in the region of the connecting rod (2).

**5.** Piston rod (1) according to at least one of Claims 1 to 4, **characterized in that** the steel tube (5) has a wall thickness of 0.4 to 8.75 mm, preferably a wall thickness of 1.9 to 6 mm.

**6.** Piston rod (1) according to at least one of Claims 1 to 5, **characterized in that** the cast iron (8) used is a nodular cast iron alloy having a high surface hardness, for example an alloy having the composition 2.5-3.8% by weight C, 2.4-3.4% by weight Si, 0.02-0.06% by weight Mg, 0.002-0.02% by weight Al, 0.0002-0.002% by weight B, 0.1-1.5% by weight Cu and 0.1-1.0% by weight Mn, remainder Fe.

**7.** Piston rod (1) according to at least one of Claims 1 to 6, **characterized in that** the steel tube (5) is produced from an uncoated structural steel.

**8.** Piston rod (1) according to at least one of Claims 1 to 7, **characterized in that** the outer side of the steel tube (5) has a metallic or non-metallic coating.

**9.** Piston rod (1) according to Claim 8, **characterized in that** the coating is produced by chemical deposition, for example by phosphatization.

**Revendications**

**1.** Bielle (1) pour moteurs à combustion interne comprenant un premier oeil de bielle plus petit (3) pour la connexion de la bielle (1) au tourillon de piston, un deuxième oeil de bielle plus gros (4) pour la connexion de la bielle (1) au vilebrequin, une tige de bielle (2) avec un axe longitudinal (A) pour la connexion fixe du premier oeil de bielle plus petit (3) au deuxième oeil de bielle plus gros (4) et un alésage (5) pour l'alimentation en lubrifiant du vilebrequin au tourillon de piston ou inversement, l'alésage (5) étant réalisé de manière symétrique par rapport à l'axe longitudinal (A), **caractérisée en ce que** l'alésage (5) est réalisé dans un tube en acier (5) surmoulé avec de la fonte de coulée (8) et **en ce que** l'alésage (5) présente un diamètre inférieur à 5 mm.

**2.** Bielle (1) selon la revendication 1, **caractérisée en ce que** le tube d'acier (5) présente une épaisseur de paroi en mm de a.X + b.Y, a et b étant des constantes déterminées de manière empirique qui dépendent du matériau coulé, de la température de coulée et de la géométrie du composant,
X étant la quantité de matière en fusion en kg qui s'écoule devant le tube d'acier (5) et Y étant le module d'élasticité local en cm de la pièce coulée dans la région du tube d'acier surmoulé (5).

**3.** Bielle (1) selon au moins l'une quelconque des revendications 1 et 2, **caractérisée en ce que** le tube d'acier (5) est réalisé sous forme fermée aux deux extrémités (6, 7) avant l'opération de coulée.

**4.** Bielle (1) selon au moins l'une quelconque des revendications 1 à 3, **caractérisée en ce que** le tube d'acier (5) est réalisé au moins en ligne droite dans la région de la tige de bielle (2).

**5.** Bielle (1) selon au moins l'une quelconque des revendications 1 à 4, **caractérisée en ce que** le tube d'acier (5) présente une épaisseur de paroi de 0,4 à 8,75 mm, de préférence une épaisseur de paroi de 1,9 à 6 mm.

**EP 2 037 088 B1**

6. Bielle (1) selon au moins l'une quelconque des revendications 1 à 5, **caractérisée en ce que** l'on utilise comme fonte de coulée (8) un alliage de fonte de coulée avec un graphite sphéroïdal de grande dureté superficielle, par exemple un alliage de composition 2,5-3,8 % en poids de C, 2,4-3,4 % en poids de Si, 0,02-0,06 % en poids de Mg, 0,002-0,02 % en poids de Al, 0,0002-0,002 % en poids de B, 0, 1-1, 5 % en poids de Cu et 0, 1-1,0 % en poids de Mn, le reste étant du Fe.

7. Bielle (1) selon au moins l'une quelconque des revendications 1 à 6, **caractérisée en ce que** le tube d'acier (5) est fabriqué en un acier de construction non revêtu.

8. Bielle (1) selon au moins l'une quelconque des revendications 1 à 7, **caractérisée en ce que** le côté extérieur du tube d'acier (5) présente un revêtement métallique ou non métallique.

9. Bielle (1) selon la revendication 8, **caractérisée en ce que** le revêtement est fabriqué par un dépôt chimique, par exemple par une phosphatation.

**6**

*A*

*1*

*3*

*6*

*5*

*2*

*4*

*7*

**Fig. 1**

*1*

*A*

*3*

*6*

*5*

*8*

*7*

*4*

**Fig. 2**

*A*

**EP 2 037 088 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1628652 A
- US 3482467 A
- DE 102004048939